# EUROPEAN PATENT SPECIFICATION

(11) **EP 3 186 502 B1**
(45) Date of publication and mention of the grant of the patent: **04.03.2020**
(21) Application number: 14755670.8
(22) Date of filing: 26.08.2014
(51) Int. Cl.: F03D 1/06

(54) **A WIND TURBINE BLADE, AND A METHOD OF REINFORCING A WIND TURBINE BLADE**
WINDTURBINENSCHAUFEL UND VERFAHREN ZUR HERSTELLUNG EINER WINDTURBINENSCHAUFEL
PALE DE TURBINE ÉOLIENNE ET PROCÉDÉ POUR RENFORCER UNE PALE D'ÉOLIENNE

(43) Date of publication of application: 05.07.2017
(73) Proprietor: Bladena Solutions ApS, 4100 Ringsted (DK)
(72) Inventor: JENSEN, Find Mølholt, DK-4130 Viby Sjælland (DK); MEJLSTRUP, Ryan, DK-4100 Ringsted (DK)
(74) Representative: Guardian IP Consulting I/S
(86) International application number: PCT/EP2014/068085
(87) International publication number: WO 2016/029937

(56) References cited:
- WO-A2-2010/000263
- US-A1- 2010 239 426
- US-B2- 8 807 953

## Description

### The prior art:

The present invention relates to a reinforced blade for a wind turbine, particularly to a blade comprising a shell having a section with an aerodynamic profile with a trailing part comprising a trailing edge formed by a first shell part and a second shell part both extending from the trailing edge in mutual divergent directions, and where at least one elongated reinforcing member is connected inside the shell for increasing the strength of the blade, each of the at least one elongated reinforcing member having a first end and a second end and extending in a longitudinal direction between the first end being connected to the first part of the shell, and the second end being connected to the second part of the shell and thereby preventing deformation of the trailing part of the shell, and wherein the elongated reinforcing member comprises an elongated element extending in its longitudinal direction between the first and the second end of the elongated reinforcing member.

Typically, a wind turbine blade has an aerodynamic shell and a girder, such as a beam or a spar. The girder can be a single beam, but often two girders are used. The two girders together with the parts of the shell extending between the two girders form a so-called box profile. The top and bottom of the box profile are often referred to as the caps. Some types of blades are designed with a spar in the form of a box profile which is manufactured separately and bonded in between prefabricated surface shells.

The aerodynamic shell is typically made of a laminate of fibre reinforced plastics, fibreglass and/or other materials. Typically, the aerodynamic shell is made from two shell parts that are assembled to form the shell. Wind turbine blades according to the prior art are known from the documents US 2007/0189903 A1 and US2007/0217918 A1.

Under normal operating conditions, the wind turbine blade is subjected to loads at an angle to the flapwise direction. It is common to resolve this load on the blade into its components in the flapwise and edgewise direction. The flapwise direction is a direction substantially perpendicular to a transverse axis through a cross-section of the blade. The flapwise direction may thus be construed as the direction, or the opposite/reverse direction, in which the aerodynamic lift acts on the blade. The edgewise loads occur in a direction perpendicular to the flapwise direction. The blade is further subject to torsional loads which are mainly aerodynamic and inertia loads.

These loads can subject the blade to harmonic motions or oscillations at the blade's torsional eigenfrequency.

When a blade is subjected to edgewise loading the section of the shell between a trailing edge of the blade and the internal girder is deforming out of the plane of the "neutral" (or initial) plane of the surface. This deformation induces peeling stresses in the trailing edge of the blade and consequently this can lead to a fatigue failure in the adhesive joint of the trailing edge where the two shell parts are connected to each other. Furthermore, the deformation of the of the shell can lead to deformations in both the shell and the girder at the connection between the girder and the shell and this can lead to fatigue failure of the girder and/or fatigue failure of the shell and/or fatigue failure in the connection between the girder and the shell.

In order to avoid such deformations US patent no. 8807953 discloses the use of elongated reinforcing elements as mentioned in the introduction to this description and thereby providing a wind turbine blade in which deformations of the shell are prevented or minimized and wherein the blade structure is strengthened without significantly increasing the overall weight of the wind turbine blade.

### The object of the invention:

On this background it is the purpose of the present invention to provide a wind turbine blade with reinforcing devices further reducing the risk of fatigue failure of the rear edge or the girder and/or fatigue failure of the shell and/or fatigue failure in the connection between the girder and the shell, and a method of retrofitting a wind turbine blade with such reinforcing devices adapted for reducing deformation of the trailing edge panels/shell parts of a wind turbine blade, and especially a wind turbine blade for a horizontal-axis wind turbine.

This is obtained by having at least one end of the elongated element connected to an overload protection device, being adapted for ensuring that the tension on the elongated element does not exceed a certain level.

The overload protection device may be formed by an element that breaks when the force providing the tension and/or compression on the elongated element exceeds the certain level, but in a preferred embodiment of the invention the overload protection device has an inner surface surrounding at least a section of the elongated element and where the inner surface slidably engages the elongated element with a force allowing the elongated element to slide with respect to the overload protection device only when the load on the elongated element exceeds the certain level.

Thereby the elongated reinforcing element is able to automatically adjust its overall length with respect to the distance between the position where it is mounted on the first and the second shell part respectively

In one embodiment the overload protection device may be arranged at the first or the second end of the elongated reinforcing member, and being connecting one end of the elongated element to the first or the second shell part.

In an alternative embodiment of the invention the elongated reinforcing member comprises two elongated elements, each having one end being connected to the first and the second shell part respectively, and opposite ends being interconnected via the overload protection device.

The elongated reinforcing element may comprise a rod extending between the first and the second end, but in a preferred embodiment each elongated element comprises a flexible string with a high tensile strength, and said certain level is lower than the tensile strength of the flexible string.

By the term string is in this relation meant any elongated flexible element, such as a wire, a strand, a fibre and the like, and having a high tensile strength,

In a preferred embodiment, the flexible string or the overload protection device has a surface with a luminescent colour in order to ease inspection of the elongated reinforcing members for breakage.

In a further preferred embodiment the overload protection device may molded, e.g. by injection molding, onto the elongated element.

In this relation the inner surface of the overload protection device may preferably form a substantially straight channel extending completely through the overload protection device.

Furthermore the at least one elongated element may preferably extend out from both ends of the straight channel, so that it allows that the elongated element may slide a little within the overload protection device, without the risk of being pulled completely out.

A wind turbine blade according to the invention may preferably comprise a plurality of said elongated reinforcing members positioned in spaced relationship along the longitudinal extension of the blade.

The present invention also discloses a method of increasing the strength of a wind turbine blade having a shell with a section having an aerodynamic profile comprising a trailing edge formed by a first shell part and a second shell part both extending from the trailing edge in mutual divergent directions, the method comprising the steps of positioning at least one elongated reinforcing member according to one or more of the preceding claims inside the shell, each of the at least one elongated reinforcing member having a first end and a second end and extending in a longitudinal direction between the first end and the second end, and connecting the first end to the upper part of the shell and the second end to the lower part of the shell.

### The drawing:

In the following one or more embodiments of the invention will be described in more detail and with reference to the drawing, where:
Fig. 1: Is a principle drawing showing a cross section of a wind turbine blade according to the invention.
Fig. 2: Is a side view and a top view of the mid-section of the elongated reinforcing element shown on figure 1.

### Description of exemplary embodiments:

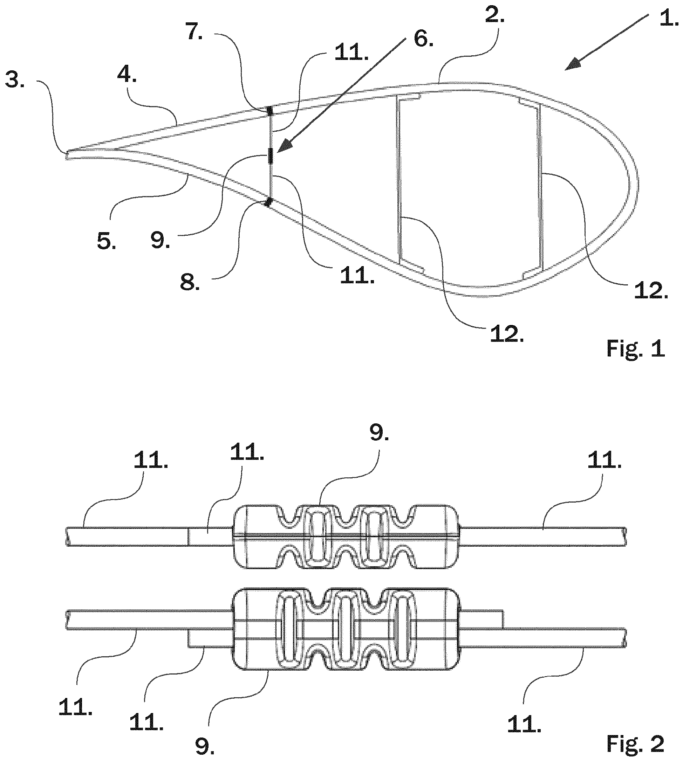

Figure 1 shows a cross section of a wind turbine blade (1) with a shell (2) being equipped with an elongated reinforcing member (6) according to the invention.

The wind turbine blade has a shell (2) with a first shell part (4) and a second shell part (5) being interconnected along the trailing edge (3) of the wind turbine blade (1), and extending in mutually divergent directions from the trailing edge (3).

Internally in the shell (2) and between the first shell part (4) and the second shell part (5) an elongated reinforcing member (6) is arranged for reducing variations of the distance between the first shell part (4) and the second shell part (5) which may e.g. cause peeling stresses in the trailing edge of the blade and consequently leading to a fatigue failure in the adhesive joint of the trailing edge where the two shell parts (4, 5) are connected to each other.

In the embodiment shown on fig. 1 the wind turbine blade further comprise a set (two) of girders (12) arranged inside the shell (2) and thereby forming a beam structure where the elongated reinforcing member (6) is arranged between the beam structure and the trailing edge (3). The invention may, however, be used with wind turbine blades having other structures, such as cross section without the girders (12), or with a different number of girders (12).

The elongated reinforcing member (6) has a first end (7) and a second end (8) being fastened to the first shell part (4) and the second shell part (5) respectively. At least one elongated element (11) extends between and interconnects the first end (7) and the second end (8) in order to provide resistance against deformations of the first shell part (4) and the second shell part (5) resulting in variations of the distance between them. In one embodiment each of the at least one elongated elements (11) may be a flexible, string, strand, wire or the like prohibiting only that the distance between the first shell part (4) and the second shell part (5) increases.

In the embodiment shown on fig. 1 and 2 the elongated reinforcing member (6) comprises two elongated elements (11) being interconnected by an overload protection device (9) such as it is shown in detail in fig. 2 showing a mid-section of the elongated reinforcing member (6) in fig. 1. Here the elongated elements (11) both extends through and out from both ends of a substantially straight channel arranged in the overload protection device (9) so that the elongated elements (11) is allowed to slide in the channel in the overload protection device (9) against a friction provided by the force by which the inner surface (not shown) forming the channel is pressed against the elongated elements (11).

In the preferred embodiment shown on fig. 2 the elongated elements (11) are both made from a string, a wire a strand, a fibre, or the like (11), having a high tensile strength, and the overload protection device (9) is injection molded onto the strings (11) by first arranging the strings (11) in the mold so that they extend through the mold cavity, and thereafter injecting e.g. a melted thermoplastic material into the mold cavity and subsequently demolding the interconnected strings (11) together with the overload protection device (9).

In an alternative embodiment, however, the overload protection device may be arranged at the first end (7) and/or the second end (8) of the elongated reinforcing member (6) and thereby forming a connection between the first shell part (4) and/or the second shell part (5) respectively, where the elongated element or string (11) can slide in the overload protection device formed by the first end (7) and/or the second end (8) of the elongated reinforcing member (6). In this embodiment the overload protection device (7, 8) may also be molded onto the elongated element or string (11) in the same way as described in relation to the overload protection device (9) arranged on the mid-section of the elongated reinforcing member (6) as shown on the figures.

## Claims

1. A wind turbine blade (1) comprising a shell (2) having a section with an aerodynamic profile with a trailing part comprising a trailing edge (3) formed by a first shell part (4) and a second shell part (5) both extending from the trailing edge (3) in mutual divergent directions, and where at least one elongated reinforcing member (6) is connected inside the shell (2) for increasing the strength of the blade, each of the at least one elongated reinforcing member (6) having a first end (7) and a second end (8) and extending in a longitudinal direction between the first end (7) being connected to the first part of the shell (4), and the second end (8) being connected to the second part of the shell (5) and thereby preventing deformation of the trailing part of the shell (2), and wherein the elongated reinforcing member (6) comprises an elongated element (11) extending in its longitudinal direction between the first and the second end of the elongated reinforcing member (6), and where at least one end of the elongated element (11) is connected to an overload protection device (9), and wherein each of the elongated reinforcing member (6) comprises a flexible, string, strand, wire or the like prohibiting only that the distance between the first shell part (4) and the second shell part (5) increases.

2. A wind turbine blade according to claim 1, wherein the overload protection device has an inner surface surrounding at least a section of the elongated element and where the inner surface slidably engages the elongated element with a force allowing the elongated element to slide with respect to the overload protection device only when the tension on the elongated element exceeds the certain level.

3. A wind turbine blade according to claim 1 or 2, wherein the overload protection device is arranged at the first or the second end of the elongated element, and is connecting one end of the elongated element to the first or the second shell part.

4. A wind turbine blade according to claim 1 or 2, wherein the elongated reinforcing member comprises two elongated elements, each having one end being connected to the first and the second shell part respectively, and opposite ends being interconnected via the overload protection device.

5. A wind turbine blade according to claim 3 or 4, wherein each elongated element is a flexible string with a high tensile strength, and where said certain level is lower than the tensile strength of the flexible string.

6. A wind turbine blade according to claim 4 and 5, wherein the flexible string or the overload protection device has a surface with a luminescent colour.

7. A wind turbine blade according to one or more of the claims 3 or 4, 5 and 6, wherein the overload protection device is molded onto the elongated element, e.g. by injection molding.

8. A wind turbine blade according to one or more of the preceding claims, wherein the inner surface of the overload protection device form a substantially straight channel extending completely through the overload protection device.

9. A wind turbine blade according to claim 8, wherein at least one elongated element extends out from both ends of the straight channel.

10. A wind turbine blade according to one or more of the preceding claims, and comprising a plurality of said elongated reinforcing members positioned in spaced relationship along the longitudinal extension of the blade.

11. A method of increasing the strength of a wind turbine blade having a shell with a section having an aerodynamic profile comprising a trailing edge formed by a first shell part and a second shell part both extending from the trailing edge in mutual divergent directions, the method comprising the steps of positioning at least one elongated reinforcing member according to one or more of the preceding claims inside the shell, each of the at least one elongated reinforcing member having a first end and a second end and extending in a longitudinal direction between the first end and the second end, and connecting the first end to the upper part of the shell and the second end to the lower part of the shell.

## Patentansprüche

1. Windturbinenblatt (1), umfassend eine Hülle (2), die einen Abschnitt mit einem aerodynamischen Profil mit einem nachfolgenden Teil aufweist, das eine nachfolgende Kante (3) umfasst, die von einem ersten Hüllenteil (4) und einem zweiten Hüllenteil (5) gebildet ist, die sich beide von der nachfolgenden Kante (3) her in gegenseitig divergierende Richtungen erstrecken, wobei mindestens ein längliches Verstärkungsglied (6) innerhalb der Hülle (2) verbunden ist, um die Festigkeit des Blatts zu erhöhen, wobei jedes der mindestens einen länglichen Verstärkungsglieder (6) ein erstes Ende (7) und ein zweites Ende (8) aufweist und sich in einer Längsrichtung zwischen dem ersten Ende (7), das mit dem ersten Teil der Hülle (4) verbunden ist, und dem zweiten Ende (8), das mit dem zweiten Teil der Hülle (5) verbunden ist, erstreckt, und dadurch eine Verformung des nachfolgenden Teils der Hülle (2) verhindert, und wobei das längliche Verstärkungsglied (6) ein längliches Element (11) umfasst, das sich in seiner Längsrichtung zwischen dem ersten und dem zweiten Ende des länglichen Verstärkungsglieds (6) erstreckt, und wobei mindestens ein Ende des länglichen Elements (11) mit einer Überlastschutzvorrichtung (9) verbunden ist, und wobei jedes der länglichen Verstärkungsglieder (6) einen flexiblen Strang, eine Faser, einen Draht oder dergleichen umfasst, der oder die lediglich verhindert, dass der Abstand zwischen dem ersten Hüllenteil (4) und dem zweiten Hüllenteil (5) sich vergrößert.

2. Windturbinenblatt nach Anspruch 1, wobei die Überlastschutzvorrichtung eine innere Oberfläche aufweist, die mindestens einen Abschnitt des länglichen Elements umgibt, und wobei die innere Oberfläche verschiebbar mit dem länglichen Element eingreift, mit einer Kraft, die es dem länglichen Element erlaubt, sich in Bezug auf die Überlastschutzvorrichtung lediglich dann zu verschieben, wenn die Spannung auf dem länglichen Element ein bestimmtes Niveau übersteigt.

3. Windturbinenblatt nach Anspruch 1 oder 2, wobei die Überlastschutzvorrichtung an dem ersten oder dem zweiten Ende des länglichen Elements angeordnet ist, und ein Ende des länglichen Elements mit dem ersten oder dem zweiten Hüllenteil verbindet.

4. Windturbinenblatt nach Anspruch 1 oder 2, wobei das längliche Verstärkungsglied zwei längliche Elemente umfasst, die jeweils ein Ende aufweisen, das jeweils mit dem ersten oder zweiten Hüllenteil verbunden ist, und wobei gegenüberliegende Ende über die Überlastschutzvorrichtung mit einander verbunden sind.

5. Windturbinenblatt nach Anspruch 3 oder 4, wobei jedes längliche Element ein flexibler Strang oder mit einer hohen Zugfestigkeit ist, und wobei das Niveau niedriger ist, als die Zugfestigkeit des flexiblen Strangs.

6. Windturbinenblatt nach Anspruch 4 und 5, wobei der flexible Strang oder die Überlastschutzvorrichtung eine Oberfläche mit einer lumineszierenden Farbe aufweist.

7. Windturbinenblatt nach einem der Ansprüche 3 oder 4, 5 und 6, wobei die Überlastschutzvorrichtung an das längliche Elemente angegossen ist, z.B. durch Spritzguss.

8. Windturbinenblatt nach einem oder mehreren der vorstehenden Ansprüche, wobei die innere Oberfläche der Überlastschutzvorrichtung einen im Wesentlichen geraden Kanal bildet, der sich vollständig durch die Überlastschutzvorrichtung erstreckt.

9. Windturbinenblatt nach Anspruch 8, wobei mindestens ein längliches Element sich von beiden Enden des geraden Kanals her auswärts erstreckt.

10. Windturbinenblatt nach einem oder mehreren der vorstehenden Ansprüche, und umfassend eine Vielzahl der länglichen Verstärkungsglieder, die in beabstandeter Beziehung entlang der Längserstreckung des Blatts positioniert sind.

11. Verfahren zum Erhöhen der Festigkeit eines Windturbinenblatts, das eine Hülle mit einem Abschnitt aufweist, der ein aerodynamisches Profil aufweist, das eine nachfolgende Kante umfasst, die von einem ersten Hüllenteil und einem zweiten Hüllenteil gebildet wird, die sich beide von der nachfolgenden Kante her in gegenseitig divergierende Richtungen erstrecken, wobei das Verfahrens die Schritte des Positionierens mindestens eines länglichen Verstärkungsglieds nach einem oder mehreren der vorstehenden Ansprüche innerhalb der Hülle umfasst, wobei jedes der mindestens einen länglichen Verstärkungsglieder ein erstes Ende und ein zweites Ende aufweisen und sich in einer Längsrichtung zwischen dem ersten Ende und dem zweiten Ende erstrecken und das erste Ende mit dem oberen Teil der Hülle und das zweite Ende mit dem unteren Teil der Hülle verbinden.

## Revendications

1. Pale d'éolienne (1) comprenant une coque (2) présentant une section avec un profil aérodynamique avec une partie de fuite comprenant un bord de fuite (3) formé par une première partie de coque (4) et une seconde partie de coque (5) s'étendant toutes les deux depuis le bord de fuite (3) dans des directions mutuellement divergentes, et où au moins un élément de renfort allongé (6) est relié à l'intérieur de la coque (2) pour augmenter la résistance de la pale, chacun de l'au moins un élément de renfort allongé (6) présentant une première extrémité (7) et une seconde extrémité (8) et s'étendant dans une direction longitudinale entre la première extrémité (7) qui est reliée à la première partie de la coque (4), et la seconde extrémité (8) qui est reliée à la seconde partie de la coque (5) et empêchant ainsi la déformation de la partie de fuite de la coque (2), et dans laquelle l'élément de renfort allongé (6) comprend un élément allongé (11) s'étendant dans sa direction longitudinale entre la première et la seconde extrémité de l'élément de renfort allongé (6), et où au moins une extrémité de l'élément allongé (11) est reliée à un dispositif de protection contre les surcharges (9), et dans laquelle chacun de l'élément de renfort allongé (6) comprend une corde, un fil, un câble flexible ou un élément similaire empêchant seulement que la distance entre la première partie de coque (4) et la seconde partie de coque (5) augmente.

2. Pale d'éolienne selon la revendication 1, dans laquelle le dispositif de protection contre les surcharges présente une surface intérieure entourant au moins une section de l'élément allongé et où la surface intérieure entre en prise coulissante avec l'élément allongé avec une force permettant à l'élément allongé de coulisser par rapport au dispositif de protection contre les surcharges uniquement lorsque la tension sur l'élément allongé dépasse le certain seuil.

3. Pale d'éolienne selon la revendication 1 ou 2, dans laquelle le dispositif de protection contre les surcharges est agencé au niveau de la première ou de la seconde extrémité de l'élément allongé, et relie une extrémité de l'élément allongé à la première ou la seconde partie de coque.

4. Pale d'éolienne selon la revendication 1 ou 2, dans laquelle l'élément de renfort allongé comprend deux éléments allongés, chacun présentant une extrémité qui est reliée à la première et à la seconde partie de coque respectivement, et des extrémités opposées qui sont reliées entre elles via le dispositif de protection contre les surcharges.

5. Pale d'éolienne selon la revendication 3 ou 4, dans laquelle chaque élément allongé est une corde flexible avec une résistance à la traction élevée, et où ledit certain niveau est inférieur à la résistance à la traction de la corde flexible.

6. Pale d'éolienne selon les revendications 4 et 5, dans laquelle la corde flexible ou le dispositif de protection contre les surcharges présente une surface avec une couleur luminescente.

7. Pale d'éolienne selon une ou plusieurs des revendications 3 ou 4, 5 et 6, dans laquelle le dispositif de protection contre les surcharges est moulé sur l'élément allongé, par exemple par moulage par injection.

8. Pale d'éolienne selon une ou plusieurs des revendications précédentes, dans laquelle la surface intérieure du dispositif de protection contre les surcharges forme un canal sensiblement droit s'étendant complètement à travers le dispositif de protection contre les surcharges.

9. Pale d'éolienne selon la revendication 8, dans laquelle au moins un élément allongé s'étend à l'extérieur depuis les deux extrémités du canal droit.

10. Pale d'éolienne selon une ou plusieurs des revendications précédentes, et comprenant une pluralité desdits éléments de renfort allongés positionnés selon une relation espacée le long de l'extension longitudinale de la pale.

11. Procédé d'augmentation de la résistance d'une pale d'éolienne présentant une coque avec une section présentant un profil aérodynamique comprenant un bord de fuite formé par une première partie de coque et une seconde partie de coque s'étendant toutes les deux depuis le bord de fuite dans des directions mutuellement divergentes, le procédé comprenant les étapes de positionnement d'au moins un élément de renfort allongé selon une ou plusieurs des revendications précédentes à l'intérieur de la coque, chacun de l'au moins un élément de renfort allongé présentant une première extrémité et une seconde extrémité et s'étendant dans une direction longitudinale entre la première extrémité et la seconde extrémité, et reliant la première extrémité à la partie supérieure de la coque et la seconde extrémité à la partie inférieure de la coque.
